# EUROPÄISCHE PATENTANMELDUNG

(11) **EP 1 839 539 A2**
(43) Veröffentlichungstag der Anmeldung: **03.10.2007**
(21) Anmeldenummer: 07103724.6
(22) Anmeldetag: 07.03.2007
(51) Int. Cl.: A47F 11/10, A47B 97/00

(54) **Regalbeleuchtungselement**

(30) Priorität: 28.03.2006 DE 202006004865 U
(71) Anmelder: GESA Form + Funktion Displaybau GmbH, 63303 Dreieich-Offenthal (DE)
(72) Erfinder: Misof, Timm, 65929, Frankfurt (DE)
(74) Vertreter: Patentanwälte Kewitz & Kollegen

(57) **Zusammenfassung**

Produktregal mit einem Beleuchtungselement, wobei das Beleuchtungselement am Produktregal befestigt ist und ferner umfasst:
einen Licht leitenden Leuchtkörper (2), der eine flächige Vorderseite aufweist, aus der das Licht austritt, und der eine Seitenfläche aufweist in die das Licht eingespeist wird, wobei der Leuchtkörper so ausgebildet ist, dass das seitlich eintretende Licht innerhalb des Leuchtkörpers auf die Vorderseite umgelenkt wird, so dass es dort austritt;
mindestens eine Lichtquelle (1), die Licht auf die Seitenfläche emittiert.

## Beschreibung

### Beleuchtungselement

Die Erfindung betrifft ein Beleuchtungselement, bestehend aus mindestens einer Lichtquelle, einem Licht leitenden Leuchtkörper mit flächiger Ausgestaltung und einem Gehäuse, wobei die Lichtquelle in einer Lichtabstrahlzone angebracht ist, an die sich an mindestens einer Seite ein Licht leitender Leuchtkörper anschließt, der das Licht seitlich aufnimmt und nach vorne abstrahlt.

### Gebiet der Erfindung:

Beleuchtungselemente sind in vielfältiger Ausgestaltung bekannt. So beschreibt die deutsche Offenlegungsschrift DE 42 20 727 A1 eine flächenstrahlende Beleuchtungseinheit, die als kompakte Einheit ausgebildet ist und ein blendfreies Licht abgibt, um somit wirkungsvoll die zu beleuchtenden Objekte anzustrahlen. Die hierbei beschriebene flächenstrahlende Beleuchtungseinheit ist aus Licht übertragenden Leuchtplatten aufgebaut, die schichtweise derart übereinander angeordnet sind, dass die Seiten der Lichtplatten, in welche das Licht eintritt, auf einem Niveau zueinander liegen, während die anderen Seiten, aus welchen das Licht austritt, stufenförmig angeordnet sind; die Lichtplatten weisen hierbei unterschiedliche Längen auf.

Die deutsche Offenlegungsschrift DE 40 31 773 A1 beschreibt hingegen ein Präsentations- oder Verkaufsregal mit einer Hinweisvorrichtung, wobei die Hinweisvorrichtung eine Fläche zur Aufnahme von Schriftzeichen, Abbildungen, Farbfeldern oder dgl. und außerdem Befestigungsmittel zum Anbringen am Regal aufweist. Somit ist DE 40 31 773 A1 in der Lage, eine Hinweisvorrichtung für Schriftzeichen, Abbildungen, Farbfeldern oder dgl. zur Verfügung zu stellen, die einfach auswechselbar oder montierbar und zudem gut erkennbar sind.

Dem gegenüber beschreibt das deutsche Gebrauchsmuster G 85 33 551 U1 ein Regal mit übereinander angeordneten Regalböden, die vorzugsweise zur Platzierung von Kosmetikartikeln dienen, wobei die einzelnen Regalböden mittels Regalstützen gegenseitig auf Abstand gehalten werden und die Regalböden, die für sich als unabhängige Regalaufleger ausgebildet sind, an ihrer Ober- oder Unterfläche derart mit Aufnahmen versehen sind, dass ein darüber befindliches Bord von dem darunter befindlichen Bord getragen wird.

Keine dieser Erfindungen beschreibt hingegen ein Beleuchtungselement mit beleuchteter transparenter Sichtfläche, das zur Aufnahme von Schriftzeichen, Abbildungen, Farbfeldern oder dgl. geeignet ist.

### Überblick über die Erfindung:

Aufgabe der vorliegenden Erfindung ist es, ein Regal mit einer homogen Lichtfläche bereitzustellen.

Die Aufgabe der vorliegenden Erfindung wird durch das in den unabhängigen Ansprüchen beschriebene Regal und dessen Leuchtkörper gelöst.

Durch die Anordnung der Lichtquelle bzw. des Leuchtmittels in einem Bereich, der den direkten Blick von außen auf das Leuchtmittel nicht zulässt, wird ein gleichmäßiger Lichtaustritt erreicht, ohne dass große Bautiefen notwendig sind.

Das Produktregal ist mit einem Beleuchtungselement verbunden, wobei das Beleuchtungselement am Produktregal mit einem Halteprofil befestigt ist.

Zur homogenen Verteilung des Lichtes ohne große Bautiefe wird ein Licht leitender Leuchtkörper, der eine flächige Vorderseite aufweist, aus der das Licht austritt, und der eine Seitenfläche aufweist, in die das Licht eingespeist wird, genutzt. Das Kunststoffprofil weist z.B. reflektierende Partikel auf, die das seitlich eintretende Licht gleichmäßig auf die Vorderseite umlenken, wobei der Leuchtkörper einheitlich das Licht abstrahlt. Hierdurch wird erreicht, dass das seitlich eintretende Licht innerhalb des Leuchtkörpers auf die Vorderseite umgelenkt wird, so dass es dort austritt. Die Lichtquelle kann somit in einem durch Profile verdeckten Bereich angeordnet sein, ohne dass eine direkte Sichtlinie der Person, die vor dem Regal steht auf das Leuchtmittel gegeben ist.

Die mit der Erfindung erzielten Vorteile bestehen darin, eine flächenstrahlende Beleuchtungseinheit zur Verfügung zu stellen, die es gestattet, in kompaktester Bauweise die Produkte im jeweiligen Regalboden zu kennzeichnen und/oder werbewirksam auf die jeweiligen Produkte hinzuweisen. Zudem kann die flächenstrahlende Beleuchtungseinheit als dekoratives Bauelement verwendet werden.

Aufgrund des Beleuchtungseffektes ist es möglich, Produktinformationen oder werbende Anpreisungen zu den jeweiligen Produkten markant bei den jeweiligen Produkten zu platzieren. Ein weiterer Vorteil der flächenstrahlenden Beleuchtungseinheit ist, dass eine größtmögliche Ablesbarkeit der transparenten Lichtfläche auch bei schlechten Lichtverhältnissen gewährleistet ist.

Vorteilhafte Ausgestaltungen der Erfindungen sind in den Schutzansprüchen dargelegt. Eine Weiterentwicklung gestattet es, dass das Beleuchtungselement eine transparente Sichtfläche aufweist, die zur Aufnahme von Schriftzeichen, Abbildungen und Farbfeldern ausgestaltet ist. Eine weitere bevorzugte Ausgestaltung sieht außerdem vor, dass die transparente Sichtfläche aus einem transparenten Polymer, vorzugsweise aus Polymethylmethacrylat (PMMA) oder Polycarbonat hergestellt ist. Auch kann das Beleuchtungselement eine Mehrzahl von Lichtabstrahlzonen aufweisen, die vorzugsweise parallel oder im rechten Winkel zueinander angeordnet sind. Es handelt sich bei der Lichtquelle um eine Kaltkathodenröhre und/oder um Leuchtdioden. In einer weiteren vorteilhaften Ausgestaltung ist das Gehäuse auf der Innenseite mit einer reflektierenden Beschichtung versehen. So erstreckt sich der Licht leitende Leuchtkörper über den gesamten Frontbereich des Beleuchtungselements. Eine weitere vorteilhafte Ausgestaltung besteht darin, dass der Leuchtkörper durch Fixierelemente auf einer bestimmten Position innerhalb des Beleuchtungselements fixiert wird. Der Leuchtkörper besteht aus Glas oder einem transparenten Polymer, vorzugsweise aus Polymethylmethacrylat (PMMA) oder Polycarbonat. Weiter weist der Beleuchtungselement zur Befestigung an einem Regalboden ein Schraubelement auf.

### Figurenbeschreibung:

Es zeigt
Fig. 1 eine schematische Darstellung des Beleuchtungselements, von der Seite;
Fig. 2 eine schematische Darstellung des Beleuchtungselements in einer L-förmigen Ausführungsform;
Fig. 3 eine schematische Darstellung des Beleuchtungselements mit einer mittigen zentralen Anordnung innerhalb des Leuchtmittels innerhalb des Kunststoffprofils.
Fig. 4 eine Vorderansicht auf ein Regalelement mit erfindungsgemäßen Beleuchtungselementen.

### Detaillierte Beschreibung:

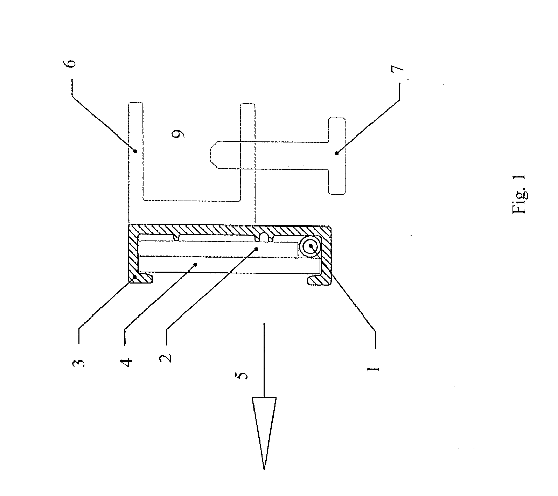

Fig. 1 zeigt in schematischer Darstellung das erfindungsgemäße Beleuchtungselement. Die Lichtquelle 1 befindet sich hierbei in einem Bereich des Beleuchtungselements, der keine direkte Sichtlinie zum Betrachter zulässt der vor der Lichtabstrahlzone 5 steht. Das von der Lichtquelle emittierte Licht gelangt durch den Licht leitenden Leuchtkörper 2 zur transparenten Sichtfläche 4. Durch eine spezielle Dotierung des Leuchtkörpers 2, wird das Licht, das an der schmalen Seitenfläche in den Leuchtkörper gestrahlt wird, innerhalb des Leuchtkörpers umgelenkt, so dass das Licht aus der Vorderseite des Leuchtkörpers austritt.
In der bevorzugten Ausführungsform ist vor dem Lichtkörper eine transparente Sichtfläche 4 (Streuscheibe) angeordnet, die eine Streuwirkung hat und den Lichtaustritt diffuser erscheinen lässt.

Das vorzugsweise rohrfömige Leuchtmittel 1 ist in einer Aussparung angeordnet, die von Hinten und unten durch das Gehäuse bzw. Trägerprofil 3 abgeschottet wird, und von vorne von einer Umgreifung des U-fömigen Profils zumindest Bereichsweise verdeckt wird. Der Licht leitende Leuchtkörper 2 liegt auf Nasen bzw. Federn beabstandet vom Trägerprofil auf. Es ist natürlich auch denkbar, dass lediglich ein einschichtiger Licht leitender Leuchtköper eingesetzt wird, der eine Ausfräsung aufweist, in der die Röhre 11 angeordnet ist.

An das Trägerprofil grenzt ein Halteprofil 6 bzw. eine Regalbodenbefestigung die sich um einen Regalboden erstreckt. Mit einem Fixierelement oder einer Befestigungsschraube, die von unten in das U-förmige Halteprofil 6 geschraubt ist, wird das Beleuchtungselement klemmend am Regalboden befestigt.

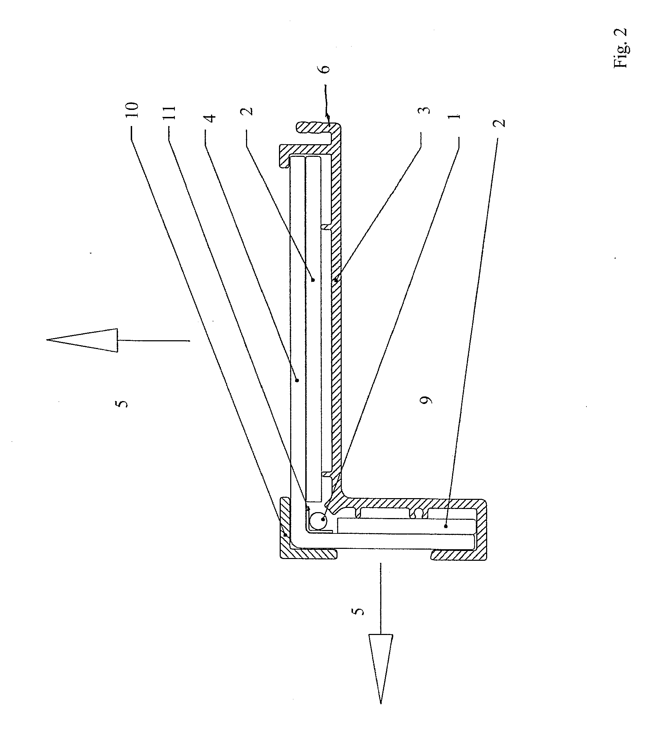

Die Figur 2 zeigt eine alternative Ausführungsform, bei der das Beleuchtungselement L-förmig ausgebildet ist. Das Leuchtmittel sitzt im Schnittpunkt der beiden Schenkel des L. Damit das Licht nicht aus der Kante austritt, ist ein L-förmiger Reflektor 11 zwischen transparenter Sichtfläche und Leuchtröhre angeordnet. Ferner ist noch ein Abdeckprofil von Außen angeordnet, um einen optisch homogenen Eindruck zu hinterlassen.

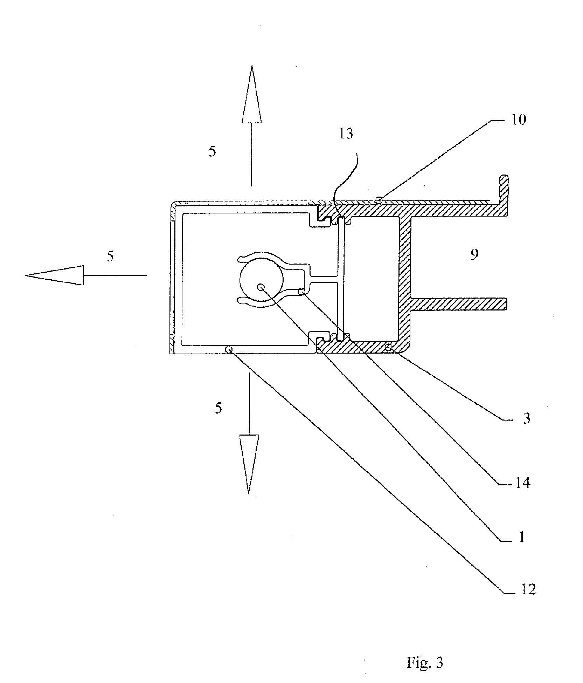

Die Figur 3 zeigt eine weitere Ausführungsform. Um einen homogenen Lichtaustritt zu erreichen, ist die Leuchtstoffröhre mittig innerhalb der Leuchte angeordnet. Ein Leuchtschirm 12, der ebenfalls als Kunststoffprofil ausgebildet ist, erstreckt sich um die mittig angeordnete Röhre 1. Der Leuchtschirm weist einen viereckigen Querschnitt auf und zusätzlich Federn auf, die in Nuten greifen, die das Trägerprofil 3 bereitstellt. Ein weiterer Satz von Nuten 13 dient dazu, dass eine Platte in das Trägerprofil geführt werden kann, auf der ein U-förmigs Klemmprofil 14 angeordnet ist, dass die Leuchte hält. Dieses Klemmprofil ermöglicht, dass die Leuchtstoffröhren klemmend zentral in der Leuchte gehalten werden kann. Das Klemmprofil ist dabei transparent ausgebildet beziehungsweise aus einem Licht leitenden Material, dass das Licht gleichmäßig verteilt, so dass eine homogene Abstrahlung innerhalb des Leuchtschirms erreicht wird. Das Klemmprofil erstreckt sich vorzugsweise über die gesamte Länge der Leuchte bzw. Leuchtmittel, so dass ein gleichmäßiger Lichtaustritt erreicht wird. Ferner wird das Klemmprofil vorzugsweise extrudiert. Zusätzlich ist um den Leuchtschirm ein Abdeckprofil angeordnet, dass bereichsweise die Kanten des Leuchtschirms verdeckt, so dass nur das Licht an den seitlichen Flächen austreten kann. Hierdurch wird die Homogenität weiter verstärkt.

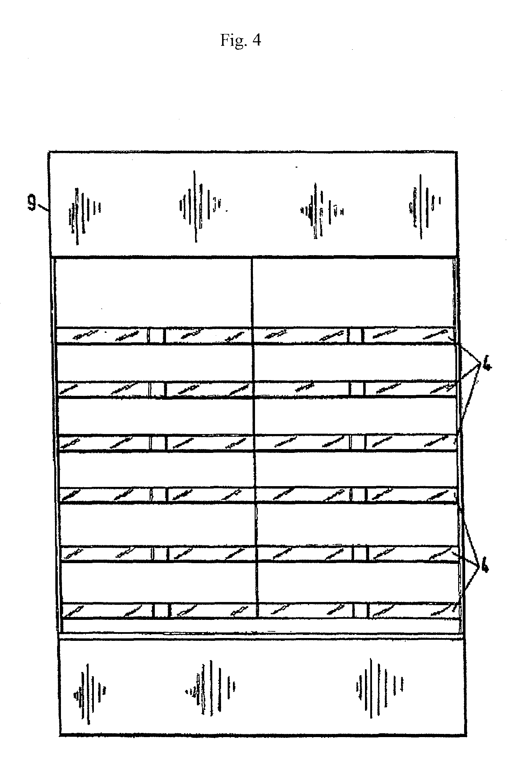

Fig. 4 zeigt die Draufsicht auf ein Regalelement mit erfindungsgemäßem Beleuchtungselement; wobei das Beleuchtungselement form- und/oder kraftschlüssig mit dem Regalelement verbunden werden kann.
Die beschriebenen bevorzugten Ausführungsformen dienen nicht der Beschränkung der Erfindung vielmehr haben sie die Aufgabe die Erfindung besser verständlich zu machen. Der Schutzumfang bemisst sich alleine durch die Schutzansprüche.

### Bezugszeichenliste

- 1: Lichtquelle
- 2: Licht leitender Leuchtkörper
- 3: Gehäuse /Trägerprofil
- 4: Transparente Sichtfläche/Streuscheibe
- 5: Lichtabstrahlzone
- 6: Regalbodenbefestigung
- 7: Fixierelement
- 9: Regal/Regalboden
- 10: Abdeckprofil
- 11: Reflektor
- 12: Leuchtschirm
- 13: Nuten
- 14: Klemmprofil

## Patentansprüche

1. Produktregal mit einem Beleuchtungselement, wobei das Beleuchtungselement am Produktregal befestigt ist und ferner umfasst:
- einen Licht leitenden Leuchtkörper, der eine flächige Vorderseite aufweist, aus der das Licht austritt, und der eine Seitenfläche aufweist in die das Licht eingespeist wird, wobei der Leuchtkörper so ausgebildet ist, dass das seitlich eintretende Licht innerhalb des Leuchtkörpers auf die Vorderseite umgelenkt wird, so dass es dort austritt;
- mindestens eine Lichtquelle, die Licht auf die Seitenfläche emittiert.

2. Produktregal nach dem vorhergehenden Anspruch, wobei die Lichtquelle in einem Bereich des Beleuchtungselements angeordnet ist, der ein unmittelbares Austreten des Lichtes der Lichtquelle auf die Vorderseite verhindert, so dass ein homogener Lichtschein entsteht.

3. Produktregal nach einem oder mehreren der vorhergehenden Ansprüche, wobei eine Nut, Falz oder eine Ausklinkung im Leuchtkörper ausgebildet ist, in dem die Lichtquelle angeordnet ist.

4. Produktregal nach einem oder mehreren der vorhergehenden Ansprüche, wobei die Lichtquelle rohrförmig ist.

5. Produktregal nach einem oder mehreren der vorhergehenden Ansprüche, wobei der Leuchtkörper aus mindestens zwei Schichten aufgebaut ist, die mit ihren Vorderseite und Rückseite aneinander liegen, von denen die erste Schicht eine Streuscheibe ist und die zweite Schicht eine Licht leitende Schicht ist, die seitlich eintretendes Licht auf die Vorderseite umlenkt, wobei das so eingetretene Licht durch die Streuscheibe gestreut wird, bevor es aus der Vorderseite der Streuscheibe austritt.

6. Produktregal nach dem vorhergehenden Anspruch, wobei die zweite Schicht ein Licht leitendes Kunststoffprofil ist.

7. Produktregal nach einem oder mehreren der vorhergehenden zwei Ansprüche, wobei die Vorderseite der zweiten Schicht an der Rückseite der ersten Schicht plan anliegt, wobei die Fläche der Vorderseite der zweiten Schicht kleiner ist als die Fläche der Rückseite der ersten Schicht, so dass eine Nut oder Falz entsteht, in der die Lichtquelle angeordnet ist.

8. Produktregal nach einem oder mehreren der vorhergehenden Ansprüche, wobei ein Trägerprofil den Leuchtkörper umgibt das nicht lichtdurchlässig ist, das Trägerprofil im wesentlichen U-förmig ausgebildet ist und im Bereich der Öffnung des U die Vorderseite des Leuchtkörpers angeordnet ist.

9. Produktregal nach dem vorhergehenden Anspruch, wobei die U-Schenkel an ihren der Öffnung hin zugewandten Enden abgewinkelt sind, so dass der Leuchtkörper umgriffen wird, und die Lichtquelle hinter der Abwinkelung verdeckt ist.

10. Produktregal nach einem oder mehreren der vorhergehenden Ansprüche, wobei der Leuchtkörper auf einem L-förmigen Trägerprofil angeordnet ist, die Lichtquelle im Bereich des Treffpunkts der Schenkel zwischen Trägerprofil und Leuchtkörper angeordnet ist, der sich von außen um das L erstreckt, ein Profil im Bereich des Treffpunkts der Schenkel angeordnet ist, so dass das zum Austritt bestimmte Licht der Lichtquelle seitlich in den Leuchtkörper gelenkt wird.

11. Produktregal nach dem vorhergehenden Anspruch, wobei das Profil ein Reflektor ist, der zwischen Leuchtkörper und Lichtquelle angeordnet ist.

12. Produktregal nach einem oder mehreren der vorhergehenden zwei Ansprüche, wobei ein L-förmiges Abdeckprofil auf dem Leuchtkörper angeordnet ist.

13. Produktregal nach einem oder mehreren der vorhergehenden Ansprüche, wobei die transparente Vorderseite zur Aufnahme von Schriftzeichen, Abbildungen und Farbfeldern ausgestaltet ist.

14. Produktregal nach einem oder mehreren der vorhergehenden Ansprüche, wobei die transparente Vorderseite des Leuchtkörpers aus einem transparenten Polymer, vorzugsweise aus Polymethylmethacrylat oder Polycarbonat, ausgestaltet ist.

15. Produktregal nach einem oder mehreren der vorhergehenden Ansprüche, wobei es sich bei der Lichtquelle um eine Kaltkathodenröhre oder Leuchtdioden handelt.

16. Produktregal nach einem oder mehreren der vorhergehenden Ansprüche, wobei das Trägerprofil auf der Innenseite mit einer Licht reflektierenden Beschichtung ausgestattet ist.

17. Produktregal mit einem Beleuchtungselement, wobei ein Beleuchtungselement am Produktregal befestigt ist und ferner umfasst:
- ein Trägerprofil zur Befestigung des Beleuchtungselements am Produktregal,
- ein Leuchtenschirm, der als Streuscheibe ausgebildet ist, der am Trägerprofil befestigt ist, und einen Raum aufspannt, in dem ein Leuchtmittel angeordnet ist,
- ein transparentes Lampenhalteprofil, das mittelbar oder unmittelbar am Trägerprofil befestigt ist, das bereichsweise U-förmig ausgebildet ist, so dass dessen Schenkel ein röhrenförmiges Leuchtmittel klemmend halten, wobei das Lampenhalteprofil durch einen Steg mittig im Raum, den der Leuchtenschirm aufspannt, angeordnet ist.

18. Produktregal nach Anspruch 17, wobei das Lampenhalteprofil, aus Licht leitendem oder klarem Kunststoff gefertigt ist.

19. Produktregal nach einem oder mehreren der Ansprüche 17 bis 18, wobei der Steg vertikal auf einer Platte angeordnet ist, und wobei die äußeren Kanten der Platte in Nuten des Trägerprofils geführt sind, wobei die Nuten an Innenseiten von U-förmigen Schenkeln des Trägerprofils ausgebildet sind.

20. Produktregal nach einem oder mehreren der Ansprüche 17 bis 19, wobei ein Abdeckprofil sich um den Leuchtenschirm erstreckt, das den Lichtdurchlass an den Kanten des Leuchtenschirms verhindert.
